# EUROPEAN PATENT APPLICATION

(11) **EP 3 792 731 A1**
(43) Date of publication of application: **17.03.2021**
(21) Application number: 19800178.6
(22) Date of filing: 01.04.2019
(51) Int. Cl.: G06F 3/01, G06T 19/00

(54) **MULTIMEDIA INFORMATION TRANSMISSION METHOD AND APPARATUS, AND TERMINAL**

(30) Priority: 10.05.2018 CN 201810444330
(71) Applicant: ZTE Corporation, Shenzhen, Guangdong 518057 (CN)
(72) Inventor: SHEN, Can, Shenzhen, Guangdong 518057 (CN); LIN, Ya, Shenzhen, Guangdong 518057 (CN); LI, Jiazhou, Shenzhen, Guangdong 518057 (CN); SUN, Jian, Shenzhen, Guangdong 518057 (CN)
(74) Representative: Regimbeau
(86) International application number: PCT/CN2019/080876
(87) International publication number: WO 2019/214370

(57) **Abstract**

Provided are a multimedia information transmission method, apparatus and terminal. The method includes: multimedia data and description information are acquired in a first device, where the description information is used for describing an environment of the first device when recording the multimedia data and describing the multimedia data; and the multimedia data and the description information are transmitted from the first device to a second device.

## Description

The present application claims priority to Chinese patent application No. 201810444330.8 filed with the CNIPA on May 10, 2018, the content of which is incorporated herein by reference in its entirety.

### TECHNICAL FIELD

The present application relates to the field of communications, and for example, to a multimedia information transmission method, apparatus and terminal.

### BACKGROUND

With the continuous development of network bandwidth, the continuous increase of computing speed of processors, and the continuous development of sensor technologies, virtual reality (VR) technology comes into application; as requirements of people on the experience of video communication are increasing, not only three-dimensional (3D) videos and 3D audios are presented, but also more information related to presentation environment, behaviors and actions, etc. needs to be acquired, and it is required to be personally on the scene.

In the related art, a panoramic video is formed through multi-camera collection and mosaic technology, a multi-channel sound is collected through multiple microphones, and a terminal adopts a progressive download technology for displaying, so that the panoramic video at respective visual angles can be viewed on a receiving end. Compared with traditional video communication manners, panoramic video communication, which implements transmission of video pictures at multiple visual angles, brings better user experience. However, there are still situations as follows: in terms of other information such as behaviors and actions, environment, the receiving end cannot synchronously present original sounds and pictures, as well as actions and environment, according to information of a generation end, which directly affects the user experience.

In view of the above-mentioned situation existing in the related art, no effective scheme has been found at present.

### SUMMARY

An overview of the subject matter described in detail herein is as follow. This summary is not intended to limit the protection scope of the claims.

Embodiments of the present application provide a multimedia information transmission method, apparatus and terminal.

According to an embodiment of the present application, a multimedia information transmission method is provided. The method includes: multimedia data and description information are acquired in a first device, where the description information is used for describing the multimedia data and an environment of the first device when recording the multimedia data; and the multimedia data and the description information are transmitted from the first device to a second device.

According to an embodiment of the present application, another multimedia information transmission method is provided. The method includes: multimedia data and description information sent by a first device are received in a second device, where the description information is used for describing the multimedia data and an environment of the first device when recording the multimedia data; the multimedia data and the description information are parsed to obtain a first content and a second content respectively; and the second content is presented when playing the first content.

According to another embodiment of the present application, a multimedia information transmission apparatus is provided. The multimedia information transmission apparatus includes an acquisition module and a transmission module. The acquisition module is configured to acquire, in a first device, multimedia data and description information, where the description information is used for describing the multimedia data and an environment of the first device when recording the multimedia data and describing. The transmission module is configured to transmit the multimedia data and the description information from the first device to a second device.

According to another embodiment of the present application, another multimedia information transmission apparatus is provided. The multimedia information transmission apparatus includes a receiving module, a parsing module and an output module. The receiving module is configured to receive, in a second device, multimedia data and description information sent by a first device, where the description information is used for describing the multimedia data and an environment of the first device when recording the multimedia data. The parsing module is configured to parse the multimedia data and the description information to obtain a first content and a second content respectively. The output module is configured to present the second content when playing the first content.

According to still another embodiment of the present application, a terminal is provided. The terminal includes a first device and a second device. The first device includes an acquisition module and a transmission module. The acquisition module is configured to acquire multimedia data and description information, where the description information is used for describing the multimedia data and an environment of a first device when recording the multimedia data. The transmission module is configured to transmit the multimedia data and the description information from the first device to the second device. The second device includes a receiving module, a parsing module and an output module. The receiving module is configured to receive the multimedia data and the description information sent by the first device. The parsing module is configured to parse the multimedia data and the description information to obtain a first content and a second content respectively. The output module is configured to present the second content when playing the first content.

According to still another embodiment of the present application, a storage medium is further provided. A computer program is stored in the storage medium. The computer program is configured to, when executed, perform steps in any one of the method embodiments described above.

According to still another embodiment of the present application, an electronic apparatus is further provided. The electronic apparatus includes a memory and a processor. A computer program is stored in the memory, and the processor is configured to execute the computer program to perform steps in any one of the method embodiments described above.

Other aspects will be apparent upon reading and understanding the drawings and detailed description.

### BRIEF DESCRIPTION OF DRAWINGS

The drawings described here are intended to provide a further understanding of the present application and constitute a part of this application. Illustrative embodiments of the present application, and description thereof, are intended to explain the present application and are not to be construed as unduly limiting of the present application. Among the drawings:
FIG. 1 is a diagram of a network architecture according to an embodiment of the present application;
FIG. 2 is a flowchart of transmission of multimedia information according to an embodiment of the present application;
FIG. 3 is a structural block diagram of a multimedia information transmission apparatus according to an embodiment of the present application;
FIG. 4 is a structural block diagram of another multimedia information transmission apparatus according to an embodiment of the present application;
FIG. 5 is a schematic diagram of a sending end according to an instance one of the present application;
FIG. 6 is a schematic diagram of RTP protocol package description information according to the present embodiment;
FIG. 7 is a schematic diagram of a description information content encapsulating structure according to the present embodiment; and
FIG. 8 is a schematic diagram of a receiving end according to the instance one of the present application.

### DETAILED DESCRIPTION

The present application will be described in detail hereinafter with reference to the accompanying drawings in conjunction with embodiments. It should be noted that embodiments of the present application and features of the embodiments may be combined with each other without conflict.

It should be noted that the terms "first", "second" and the like, in the description and claims of the present application and the above-described drawings, are used for distinguishing between similar objects and not necessarily for describing a particular order or sequence.

### Embodiment one

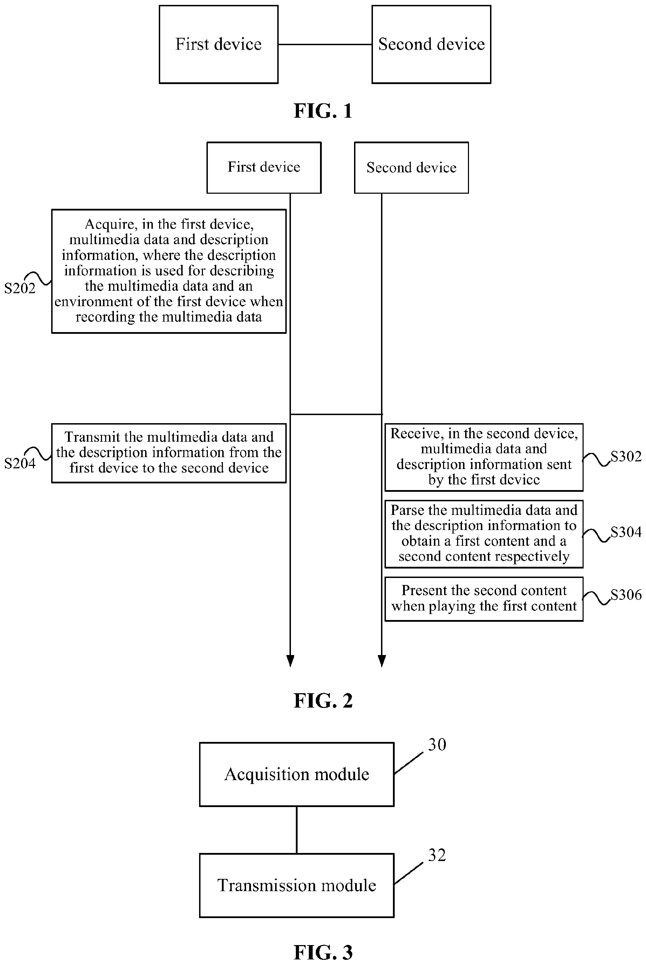

The embodiment of the present application may be operated on a network architecture shown in FIG. 1. FIG. 1 is a diagram of a network architecture according to an embodiment of the present application. As shown in FIG. 1, the network architecture includes a first device and a second device interacting with each other.

In this embodiment, a multimedia information transmission method running on the network architecture described above is provided. FIG. 2 is a flowchart of transmission of multimedia information according to an embodiment of the present application. As shown in FIG. 2, the procedure includes step S202 and step S204.

In step S202, multimedia data and description information are acquired in the first device, where the description information is used for describing the multimedia data and an environment of the first device when recording the multimedia data.

In step S204, the multimedia data and the description information are transmitted from the first device to the second device.

Through the above steps, when the multimedia data is transmitted, the description information used for describing the multimedia data and the environment of the first device when recording the multimedia data is also transmitted to the second device, so that the second device can present a content related to the description information while playing a multimedia content, and thus a situation that the description information cannot be transmitted when multimedia information is transmitted in the related art is avoided, mutual fusion of the multimedia content and the environment is achieved, somatosensory interaction of all communication parties is achieved, and immersive experience is presented.

In an embodiment, an executive body of the above steps may be a terminal, such as a mobile phone, a virtual reality (VR) terminal, but is not limited thereto.

The multimedia data in this embodiment includes audio data, video data and the like.

In an embodiment, the transmission of the multimedia data and the description information from the first device to the second device may be implemented in, but is not limited to, the following manner.

The multimedia data is transmitted to the second device in a first channel, and the description information is transmitted to the second device in a second channel; the first channel may be a multimedia data transmission channel; the multimedia data and the description information are stored in a first file, the multimedia data and the description information are obtained by reading the first file, thereby realizing a non-real-time transmission to the second device; the first file is optional, the first file may be stored as a file for non-real-time applications such as an encoder and a camera, the real-time communication service does not need to be stored into the file so as to realize the recording function, a non-real-time VR video may be played, and the first file is read in the course of playing, and then the multimedia data and the description information are transmitted by using the first channel and the second channel; where the first channel and the second channel are established between the first device and the second device.

In an embodiment, the second channel is an independent channel, or the second channel may also be incorporated into the first channel for transmission, the second channel is a tunnel in the first channel.

In an embodiment, the transmission of the multimedia data and the description information from the first device to the second device may be, but is not limited to, following manners.

The multimedia data is transmitted to the second device in real time, so that the multimedia data is displayed on the second device in real time; the description information is sent to the second device in real time; and the multimedia data and the description information is transmitted to the second device in real time, so that the multimedia data and the description information are displayed on the second device in real time.

In an embodiment, before the multimedia data and the description information are transmitted from the first device to the second device, the method further includes: the multimedia data is compressed, encoded and packaged into a first data packet, and the description information is packaged into a second data packet.

In an embodiment, the description information of the present embodiment includes at least one of, exemplified here, a timestamp, duration time, a coordinate, object identification information, or a description content.

The timestamp is used for describing record time of the multimedia data.

The duration time is used for describing duration time of the multimedia data from initial time to current time.

The coordinate is used for describing a record position of the multimedia data.

The identification information of the object is used for identifying an object in a picture corresponding to the multimedia data; the object may be a person or scenery and the like.

The description content is used for describing at least one of an environment in the picture corresponding to the multimedia data or information obtained by analyzing the multimedia data.

For example, the description content includes at least one of: a text content from voice recognition of audio data, a language of the audio data, an intonation of the audio data, an emotion of an object in a video image, a physical characteristic of the object in the video image, an action of the object in the video image, a power of the object in the video image, a wind power in an environment of a picture corresponding to the video image, a wind direction in the picture corresponding to the video image, an temperature in an environment of a picture corresponding to the multimedia data, a smell sense in the environment of the picture corresponding to the video image, a smell in the environment of the picture corresponding to the video image, or a tactile sense of the object in the video image, where the multimedia data includes video data and the audio data.

A scheme of this embodiment may be applied to different scenes and use different transmission protocols. The multimedia data and the description information are transmitted from the first device to the second device using a real-time transport protocol (RTP); the description information is transmitted from the first device to the second device using a session initiation protocol (SIP); the description information is transmitted from the first device to the second device using a real time streaming protocol (RTSP); the multimedia data and the description information are transmitted from the first device to the second device using a customized transmission protocol.

In an embodiment, the step in which the multimedia data and the description information are acquired in the first device includes step S11 and step S12.

In step S11, data is collected through multiple sensors. The sensors collect original data of the multimedia data and the description information respectively, and the sensors include at least one of: a motion sensor, an environment sensor, a laser radar, a millimeter wave radar, a scent sensor, or a sensing glove. A sensor (such as a camera, a microphone) may be disposed in the first device, may also be an external sensor connected to the first device, and may be aggregated and processed through the first device.

In step S12, the data is analyzed and processed in the first device, and the multimedia data and the description information are extracted. The description information is obtained by analyzing and processing original data collected by various sensors, for example, description information related to temperature is obtained through a temperature sensor; and the description information may also be obtained by analyzing and processing original audio and video data, for example, description information related to emotion is obtained by analyzing character expressions in a video picture.

In this embodiment, another multimedia information transmission method running on the network architecture described above is provided. In a second device at a receiving end, as shown in FIG. 2, the procedure includes step S302, step S304 and step S306.

In step S302, multimedia data and description information sent by a first device are received in the second device, where the description information is used for describing the multimedia data and an environment of the first device when recording the multimedia data.

In S304, the multimedia data and the description information are parsed to obtain a first content and a second content respectively.

In S306, the second content is presented when playing the first content.

In one embodiment, the step in which the multimedia data and the description information sent by the first device are received in the second device includes: the multimedia data sent by the first device is received in a first channel of the second device, and the description information sent by the first device is received in a second channel; where the first channel and the second channel are established between the first device and the second device. Or the multimedia data and the description information may be acquired by reading a first file, and then the multimedia data and the description information are transmitted by using the first channel and the second channel, so that non-real-time transmission is realized.

In this embodiment, the step in which the second content is presented when playing the first content includes: the first content is played in at least one third device, and the second content is presented in at least one fourth device. The first content is a multimedia content, including a video content, an audio content and the like, and may be played through a display screen or a loudspeaker. The second content is presented or simulated through a corresponding presentation terminal, for example, a timestamp or duration time is displayed through the display screen, temperature is simulated and presented through a refrigeration device or a heating device, a smell is presented by releasing a specific smell, a power is presented through a driving device, and the like.

Those skilled in the art will clearly appreciate from the description of the above embodiments that the methods according to the embodiments described above may be implemented by means of software plus the requisite general-purpose hardware platform, and of course may also be implemented by hardware. Based on such understanding, the technical scheme of the present application, either essentially or in terms of contributions to the related art, may be embodied in the form of a software product, and the computer software product is stored in a storage medium, such as a read only memory/random access memory (ROM/RAM), a magnetic disk, or an optical disk, including multiple instructions to enable a terminal device (such as a mobile phone, a computer, a server or a network device) to perform the method described in the embodiments of the present application.

### Embodiment two

A multimedia information transmission apparatus is further provided in this embodiment, and this apparatus is configured to realize the embodiments and the example implementation modes described above, which will not be described in detail for those already explained. The term "module" hereinafter may implement a combination of at least one of software and hardware with predetermined functions. Although the apparatus described in following embodiments may be implemented in software, implementations of hardware, or a combination of software and hardware, are also possible and contemplated.

FIG. 3 is a structural block diagram of a multimedia information transmission apparatus according to an embodiment of the present application. As shown in Fig. 3, the multimedia information transmission apparatus is applied to a first device, and the apparatus includes an acquisition module 30 and a transmission module 32.

The acquisition module 30 is configured to acquire, in the first device, multimedia data and description information, where the description information is used for describing the multimedia data and an environment of the first device when recording the multimedia data and describing.

The transmission module 32 is configured to transmit the multimedia data and the description information from the first device to a second device.

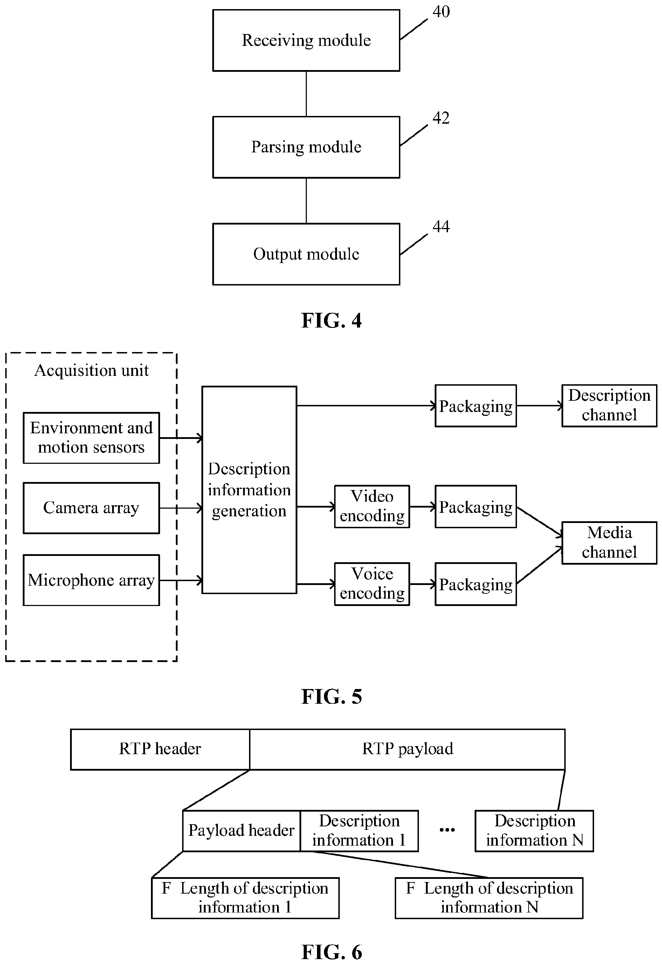

FIG. 4 is a structural block diagram of another multimedia information transmission apparatus according to an embodiment of the present application. As shown in FIG. 4, the multimedia information transmission apparatus is applied to a second device, and the apparatus includes a receiving module 40, a parsing module 42 and an output module 44.

The receiving module 40 is configured to receive, in the second device, multimedia data and description information sent by a first device, where the description information is used for describing the multimedia data and an environment of the first device when recording the multimedia data.

The parsing module 42 is configured to parse the multimedia data and the description information to obtain a first content and a second content respectively.

The output module 44 is configured to present the second content when playing the first content.

In this embodiment, a terminal is further provided, which combines functional modules included in the first device and the second device, and may realize functions of the first device and the second device.

It should be noted that various modules described above may be implemented in software or hardware, and for the latter, the various modules described above may be implemented, but are not limited to, by following manners: the modules described above are located in a same processor; or the modules described above are respectively located in different processors in any combination form.

### Embodiment three

This embodiment is provided to explain and illustrate the scheme of the present application in conjunction with specific instances in detail, which may be implemented as a supplement or extension to this application.

A video communication method provided by this embodiment can provide immersive experience. This application provides an immersive and interactive video communication method, which includes: a generation end corresponding to a first device analyzes and processes original data collected by various sensors, cameras and microphones, extracts and packages description information, compresses, encodes and packages original audio and video data, transmits the description information in a description channel, and transmits encoded audio and video data in a media channel; and a receiving end corresponding to a second device receives the description information and the encoded audio and video data, unpackages and decodes the encoded audio and video data, analyzes and processes description data, and synchronously plays audio and video and presents actions and environments by means of a presentation unit.

In the process described above, if transmission is not performed in the media channel or the description channel, then the description information and the encoded audio and video data may be stored in a file, and the receiving end extracts the encoded audio and video data and the description information from the file for presentation.

The various sensors include a motion sensor, an environment sensor, a laser radar, a millimeter wave radar and the like; the camera may be an array formed by at least one camera; and the microphone may be an array formed by at least one microphone.

The description information includes information obtained by analyzing and processing the original data collected by various sensors and information obtained by analyzing and processing the original audio and video data, and the description information includes a timestamp, duration time, a coordinate, a serial number of a corresponding person or object, a specific content and the like. The specific content in the description information includes, but is not limited to, a text content after voice recognition, language, intonation, emotion, physical characteristics, action, power, wind power, wind direction, temperature, smell sense and the like. The timestamp refers to occurrence time of the description information, the duration time represents duration time of the description information, the coordinate represents a position at which the description information is collected, and the serial number of the corresponding person or object represents an object on which the description information is generated. Since the audio and video data also carries the timestamp when being packaged, the receiving end achieves synchronous presentation of the description information and the audio and video according to description information timestamp and audio and video timestamp, and the receiving end may present the description information on a same coordinate, time and object as the sending end according to the description information.

The description channel may be implemented by extending a transport protocol such as RTP, SIP or RTSP, and may also be other transport protocols.

This application further provides an immersive and interactive video communication system and apparatus, which includes a sending apparatus and a receiving apparatus.

The sending apparatus includes following processing steps: a collection unit collects original data through various sensors, cameras and microphones; a description information generation unit analyzes and processes the original data and extracts the description information, and a coding unit performs video compression and encoding on the original video data, and audio compression and encoding on the original audio data; a packaging unit packages the description information, and packages the encoded video data and the encoded audio data respectively; and a sending unit transmits the description information in the description channel and transmits the encoded video data and the encoded audio data in the media channel, and if the transmission is not performed via a network, the storage unit stores the description information and the encoded audio and video data in a file.

The collection unit is configured to collect original data through a camera, a microphone and various sensors. The various sensors include a motion sensor, an environment sensor, a laser radar, a millimeter wave radar and the like; the camera may be an array formed by at least one camera; and the microphone may be an array formed by at least one microphone.

The description information generation unit is configured to extract an action, environment and audio and video description information from the original data collected by various sensors and the original audio and video data, and the description information includes a timestamp, duration time, a coordinate, a serial number of a corresponding person or object, a specific content and the like. The specific content in the description information includes, but is not limited to, a text content after voice recognition, language, intonation, emotion, physical characteristics, action, power, wind power, wind direction, temperature, smell sense and the like. The timestamp refers to occurrence time of the description information, the duration time represents duration time of the description information, the coordinate represents a position at which the description information is collected, and the serial number of the corresponding person or object represents an object on which the description information is generated.

The coding unit is configured to compress and encode on the collected original audio and video data.

The packaging unit is configured to package the encoded audio and video data to form an encoded audio and video data packet and package the description information to form a description information data packet. The description information and the encoded audio and video data packet are respectively packaged and encapsulated according to respective formats, a possible packaging format is provided in the embodiment, but a specific packaging format of the audio and video description information is not limited by the present application.

The sending unit is configured to send the description information data packet in the description channel and send the encoded audio and video data packet in the media channel. The description channel may be implemented by extending a transmission protocol of RTP or SIP, and may also be an independently established transmission channel.

The storage unit is configured to store the encoded audio and video data and the description information into the file.

The receiving apparatus includes following processing steps: a receiving unit receives the description information packet and the encoded audio and video data packet from the description channel and the media channel, or reads out the description information and the encoded audio and video data from the file; an unpacking unit unpackages the encoded audio data packet, the encoded video data packet and the description information packet; a decoding unit decodes the encoded audio data and the encoded video data to obtain the original audio and video data, and a description information processing unit processes the description information and the original audio and video data; and a presentation unit synchronously plays the processed original audio and video data, and presents the action and the environment.

The receiving unit is configured to: receive the encoded audio and video data packet in the media channel and receive the description information data packet in the description channel, where the description channel may be implemented by extending the transmission protocol of RTP or SIP, and may also be an independently established transmission channel; read out the encoded audio and video data packet and the description information data packet from the file.

The unpacking unit is configured to parse the encoded audio and video data packet and the description information data packet to obtain encoded voice data, the encoded video data and the description information. The description information includes a timestamp, duration time, a coordinate, a serial number of a corresponding person or object, a specific content and the like. The specific content in the description information includes, but is not limited to, a text content after voice recognition, language, intonation, emotion, physical characteristics, action, power, wind power, wind direction, temperature, smell sense and the like.

The decoding unit is configured to decode the encoded voice data and the encoded video data to obtain playable original audio and video data.

The description information processing unit is configured to analyze and process the audio and video description information according to the description information and restore different types of description information of the audio and the video.

The presentation unit is configured to present the audio and the video according to timestamp corresponding to the audio and video data, present the description information according to description information timestamp, synchronously present the description information and the audio and video; meanwhile, control a presentation time length according to the duration time of the description information, and present the description information at different positions and objects according to the coordinate and the object of the description information.

This embodiment further includes following instances:
First four instances incorporates different application scenes to respectively provide implementation methods of the description information through different manners such as a transport protocol RTP, a file storage MP4, a signaling control protocol SIP and a signaling control protocol RTSP; a fifth instance provides an implementation method for extracting the description information;, and a sixth instance provides an implementation method for synchronously presenting audio, video, environment and action behavior.

### Instance one: live scene

A sending apparatus and a receiving apparatus are included. A call connection has been established between the sending apparatus and the receiving apparatus first through an SIP protocol or an RTSP protocol.

The sending apparatus is shown in FIG. 5. FIG. 5 is a schematic diagram of a sending end according to the instance one of the present application. Steps 1 to 5 are performed.

In step 1, original data are collected through sensors such as a motion sensor and an environment sensor. The sensors include a glove, clothes, a hat, a shoe, temperature, smell, wind power and the like. Original video data is collected by a camera array, and original audio data is collected by a microphone array.

In step 2, the data collected in step 1 is processed and analyzed, mosaic processing is performed on the video, noise is eliminated, an object in the video is identified, information such as characteristics of the object of interest is extracted, original voice data is processed, noise and echo are eliminated, a coordinate of the voice is extracted, the voice is converted into a text, intonation, emotion of voice and the like, and description information such as motion and environment is extracted from sensors such as a motion sensor and an environment sensor. The description information includes a timestamp, duration time, a coordinate, a serial number of a corresponding person or object, a specific content and the like. The specific content in the description information includes, but is not limited to, a text content after voice recognition, language, intonation, emotion, physical characteristics, action, power, wind power, wind direction, temperature, smell sense and the like. The timestamp refers to occurrence time of the description information, the duration time represents duration time of the description information, the coordinate represents a position at which the description information is collected, and the serial number of the corresponding person or object represents an object on which the description information is generated. The description information is defined and hierarchically quantized, Each description information further includes a description information type, a description information serial number, a termination mark and the like, when the description information with a same description information serial number appears for the first time, the termination mark is set to be 1, and when the description information with the same description information serial number appears for the last time, the termination mark is set to be 0.

Table 1 provides content names, content codes, and illustration of the description information, which may be extended to include more contents.

**Table 1**

| Content name | Content code | Illustration |
|---|---|---|
| Timestamp | 1 | Occurrence time of the information |
| Coordinate | 2 | Spatial coordinate of the description information occurrence |
| Serial number of a corresponding person or object | 3 | Object on which the description information is generated |
| Duration time | 4 | Time length of presentation of the information |
| Description information serial number | 5 | Serial number of the description information |
| Description information type | 6 | Voice, video, action, environment, etc. |
| Termination mark | 7 | 1 denotes starting of the event, 0 denotes ending of the event |
| Text content after voice recognition | 8 | Specific content of the description information |
| Language | 9 | Language type |
| Intonation | 10 | Intonation type |
| Emotion | 11 | Emotion of people |
| Physical characteristics | 12 | Characteristics of a people or object |
| Action | 13 | Action of a person or object |
| Power | 14 | Power of action and behavior |
| Wind power | 15 | Wind power of environment |
| Wind direction | 16 | Wind direction of environment |
| Temperature | 17 | Temperature of environment |
| Smell sense | 18 | Smell of environment |

In step 3, the video is compressed and encoded by adopting an encoding algorithm of H.265, an audio is compressed and encoded by adopting an adaptive multi-rate wideband (AMR WB) to obtain encoded audio data and encoded video data.

In step 4, the encoded video data is packaged and encapsulated according to Request For Comments (RFC) 7798, and the encoded voice data is packaged and encapsulated according to RFC 4867.

Audio and video description information is subjected to RTP packaging and encapsulation, the description information and an audio and video stream are synchronously presented through RTP timestamp information, each RTP packet includes the description information corresponding to a same time slice, a specific packaging format being shown in FIG. 6. FIG. 6 is a schematic diagram of RTP protocol package description information according to this embodiment, fields of an RTP packet header are encapsulated according to RFC 3550, and a timestamp field of description information packet is consistent with a clock frequency of the audio and video media packet, so as to facilitate synchronous processing during presentation on the receiving end. A RTP payload includes at least one description information, and each description data corresponds to one indication information block in an RTP payload header and includes an F indication bit and a description information length; the F indication bit indicates whether current data is the last description information, if the current data is the last description information, the F indication bit is 1, and if the current data is not the last description information, the F indication bit is 0; the length of description information 1 indicates the length of a first description information, and the length of description information N indicates the length of a N-th description information, i.e., a unit byte.

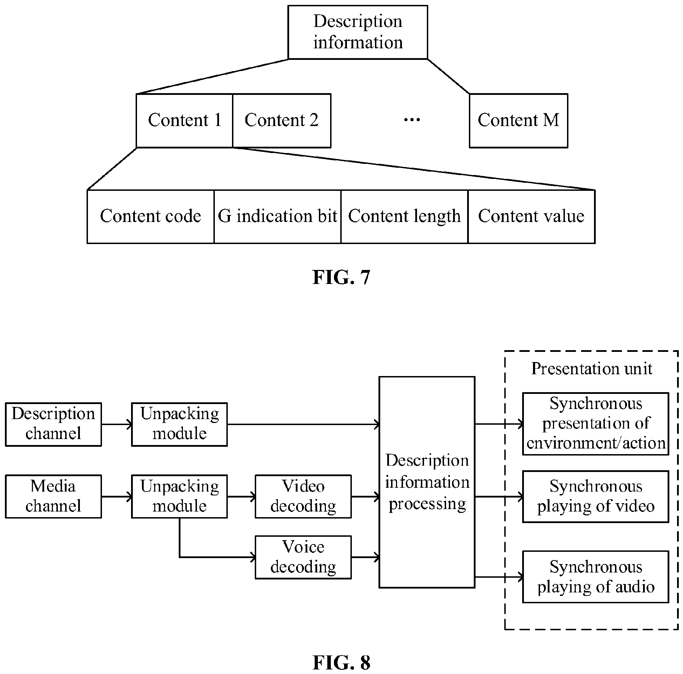

FIG. 7 is a schematic diagram of a description information content encapsulate structure according to this embodiment. As shown in FIG. 7, description information may include multiple contents, each of the contents may include a content code, a G indication bit, a content length, and a content value. The content code is shown in table 1. The G indication bit indicates whether a current content is the last content information, and if the current content is the last content information, the G indication bit is 1; and if the current content is not the last content information, the G indication bit is 0. If the content value is too long, a same description information may be split into and transmitted in multiple RTP packets, the G indication bit is set to be 0, and a next RTP packet continues to transmit a same content value; and if the G indication bit is set to be 1, a data packet with a same content do not exist subsequently. A content length refers to the length of the content value in units of byte.

Moreover, information such as PT values of RTP packet headers corresponding to audio and video description information streams may be described in SDP.

In step 5, the description information data packet and the encoded audio and video data packet which have been packaged and encapsulated are sent.

A receiving end is shown in FIG. 8. FIG. 8 is a schematic diagram of the receiving end according to the instance one of the present application. Steps 1 to 5 are included.

In step 1, network data packets are received from respective ports to obtain a description information packet and an encoded audio and video data packet.

In step 2, packet contents are parsed according to corresponding formats to obtain description information and encoded audio and video data.

In step 3, the encoded audio and video frame data is decoded to obtain playable audio and video data.

In step 4, the description information is analyzed and processed, and different types of description information are restored and used for controlling different peripherals for presentation, for example, smell information is used for controlling a smell generation apparatus to synthesize the specified smell. Audio and video are analyzed and processed to restore audio and video data at different visual angles.

In step 5, the audio and video data is synchronously played according to a timestamp corresponding to the audio and video data, the description information is presented according to a description information timestamp to implement synchronous presentation of the description information and the audio and video; meanwhile, a presentation time length is controlled according to the duration time of the description information, and the peripheral is controlled to present corresponding action, behavior and environment according to the description information at different positions and objects according to the coordinate and object of the description information, and subtitles of different languages may be inserted into the played video according to the description information, and the visual angle may be switched according to an orientation of the voice.

### Instance two: on-demand scene

An encoder, a streaming media server and a player are included. Steps 1 to 7 are included.

In step 1, the encoder collects description data and audio and video data, and analyzes, processes and encodes the description data and the audio and video data. Detailed steps are made reference to the steps 1 to 3 of the instance one.

In step 2, the encoder stores description information and encoded audio and video data into an MP4 file.

An audio track and a video track are established for the audio and video data in pairs, and a text track is established for the description information.

Description information data is placed in a media data box (mdat box), and the description information data includes a coordinate, a serial number of a corresponding person or object, duration time, a description information type, a description information serial number, a termination mark and a specific content.

Timestamp information of the description information is placed in a duration field of a file header.

It should be noted that an implementable file format is provided herein, and that a file format stored by the server is not limited to the MP4 file.

In step 3, the MP4 file is transmitted to the streaming media server.

In step 4, the player sends a hyper text transport protocol get (HTTP GET) request to the streaming media server, a Moov atom in the MP4 file is downloaded and parsed for index information.

In step 5, the player sends a GET request with a range field, so as to specify a segment of MP4 file at a specific position to be played.

In step 6, the player reads out encoded audio and video contents and the description information from the mdat box through the index information; decodes and analyzes audio and video frames; and analyzes the description information to restore different types of description information.

In step 7, the player synchronously plays the audio and video data; meanwhile, searches out description information with a same timestamp in the MP4 file according to the index information, so as to present the description information and the audio and video synchronously, applying a corresponding action to a specified object according to the serial number and coordinate of the people or object in the description information; meanwhile, controls a presentation time length is according to the duration time of the description information, and controls a peripheral according to the description information at different positions and objects according to the coordinate and object of the description information, so as to present respective action, behavior and environment corresponding to the peripheral.

### Instance three: real-time monitoring scene

A camera and a player are included. Steps 1 to 7 are included.

In step 1, the player and the camera establish a connection through SIP signaling.

In step 2, the camera collects description data and audio and video data, and analyzes, processes and encodes the description data and the audio and video data. Detailed steps are made reference to the steps 1 to 4 of the instance one.

In step 3, the camera sends an RTP packet of the audio and video data to the player.

In step 4, the camera places description information in a text form in a message method of SIP extension, and the description information is sent to the player in time. For example:
CSeq: 1 MESSAGE
Content-Type: text/plain
Content-Length: 200

### Description information text content

The above description information text content is composed of a description information coordinate, a serial number of a corresponding person or object, a timestamp, duration time, a description information type, a description information serial number, a termination mark and a specific content. The text format adopted for packaging is specifically: Name code: Content value.

In step 5, the player receives the RTP packet of audio and video, parses the RTP packet, and decodes and analyzes an audio and video frame.

In step 6, the player receives a message of the SIP, parses the message to obtain the description information, and analyzes the description information to restore different types of description information.

In step 7, the player synchronously plays the audio and video data; meanwhile, searches out description information with a corresponding timestamp in the description information received in the step 6, so as to present the description information and the audio and video synchronously; meanwhile, controls a peripheral sensor according to the description information to present a corresponding action and behavior of the peripheral sensor.

### Instance four: real-time interactive communication scene

A terminal A and a terminal B are included. Each of the terminal A and the terminal B includes one sending module and one receiving module. A call is established first between the terminal A and the terminal B through a SIP protocol, and steps of interactive communication are as follows.

The sending module of the terminal A analyzes and processes original data collected by various sensors, cameras and microphones, extracts and packages description information, compresses, encodes and packages original audio and video data, transmits the description information in a description channel, and transmits the encoded audio and video data in a media channel. The receiving module of the terminal B receives the description information and the encoded audio and video data, unpackages the description information and the encoded audio and video data, decodes the encoded audio and video data, analyzes and processes the description data, so that a presentation unit synchronously plays audio and video and synchronously presents actions and environments.

Meanwhile, the sending module of the terminal B analyzes and processes original data collected by various sensors, cameras and microphones, extracts and packages description information, compresses, encodes and packages original audio and video data, transmits the description information in a description channel, and transmits the encoded audio and video data in a media channel. The receiving module of the terminal B receives the description information and the encoded audio and video data, unpackages the description information and the encoded audio and video data, decodes the encoded audio and video data, analyzes and processes the description data, so that a presentation unit synchronously play audio and video and synchronously presents actions and environments.

When a user in the terminal A wears a glove and shakes hands with a user in the terminal B, the sending module of the terminal A collects data such as amplitude and strength of a handshake action of the user, and transmits the data to the receiving module of the terminal B through the description channel, and the receiving module synchronously presents the handshake action in real time through the glove in the terminal B; the user of the terminal B also makes a same handshake action, the sending module of the terminal B collects data of the handshake action and then transmits the data to the receiving module of the terminal A through the description channel, and the receiving module synchronously presents the handshake action in real time through the glove of the terminal A. Therefore, a real-time interaction of the two terminals is realized as if face-to-face real-time communication is performed.

Meanwhile, the sending module of the terminal A collects a concentration and coordinate of perfume smell, and transmits the concentration and coordinate of the perfume smell to the receiving module of the terminal B through the description channel, the receiving module presents the same smell and concentration through a smell display apparatus of the terminal B, and when a termination mark of smell description information transmitted by the terminal A is 0, the smell presentation is ended.

### Instance five:

An implementation method of extracting and generating description information in bidirectional real-time video communication is provided. The implementation method includes steps 1 to 5.

In step 1, data collected by various peripheral sensors is extracted, and related information is recorded according to time. For example, timestamp 1: sensing glove: amplitude, strength, duration time of a handshake action, serial number corresponding to a person, and coordinate; timestamp 2: scent sensor: smell concentration, scent, duration time, coordinate, etc.

In step 2, a video content is analyzed, interested information is extracted, and the interested information is recorded according to time. For example, timestamp 1: serial number corresponding to a person, coordinate, emotion and mood, duration time, etc.; timestamp 2: serial number corresponding to a person or object, coordinate, and action and behavior (e.g., passing through a warning line).

In step 3, voice recognition is performed on an audio content, interested information is extracted, and the interested information is recorded according to time. For example, timestamp 1: serial number corresponding to a person, coordinate, intonation, language, translated voice content, etc.

In step 4, all recorded information in the above steps 1 to 3 are analyzed and combined according to time.

In step 5, the analyzed and combined information is uniformly defined according to a format specified by the description information, such as, a timestamp, a description information serial number, a description information type, a coordinate, a serial number corresponding to a person or object, duration tine, a termination mark, and a specific content.

### Instance six:

A method for synchronously presenting description information and an audio and video content is provided. The method includes steps 1 to 3.

In step 1, a reference track is selected as an alignment reference for synchronous processing.

When a certain media track is selected as a reference, playing speeds of other media tracks or description information may be adjusted (a fast playing or a slow playing) under the effect of the reference track. In combination with the visual and auditory characteristics of people, people are more sensitive to a variable-speed playing of voice frames when playing voice frames, and can hardly perceive slight change of time when playing video frames and presenting description information, so that voice is selected as the reference.

In step 2, starting points are aligned. According to absolute playing time of the first voice frame, such as NTP time, and a timestamp of the first voice frame, a timestamp of a video frame aligned with the first voice frame and a timestamp of the description information are calculated.

In step 3, audio and video frames are synchronously played, and description information corresponding to respective timestamps is analyzed and processed. Presentation time length is controlled according to duration time of the description information, and a peripheral is controlled according to the description information at different positions and objects according to the coordinate and object of the description information, corresponding action and behavior and environment of the peripheral are presented, for example, the amplitude and the strength of the handshake are presented through a sensing glove, and the scent with corresponding scent type and concentration is generated within a period of time indicated by the description information through a scent generation apparatus.

In conclusion, through the embodiments of the present application, immersive interactive video communication is realized, and thus the user experience is improved.

According to the scheme of this embodiment, the immersive video experience may be better realized in video communication, actions and environments may be completely and synchronously presented while audios and videos are presented, mutual fusion of the audios, the videos and the environments is realized, somatosensory interaction of all communication parties is realized, and immersive experience is presented. Meanwhile, two-party or multi-party real-time communication is supported, content storage and distribution is also supported, and various video services are supported.

### Embodiment four

In an embodiment of the present application, a storage medium is further provided. A computer program is stored in the storage medium, and the computer program is configured to, when executed, perform steps in any one of the method embodiments described above.

In an embodiment, the storage medium described above may be configured to store a computer program configured to perform steps S1 and S2.

In step S1, multimedia data and description information are acquired in the first device, and the description information is used for describing the multimedia data and an environment of the first device when recording the multimedia data.

In step S2, the multimedia data and the description information are transmitted from the first device to the second device.

In an embodiment, the storage medium described above may include, but is not limited to, various media that may store the computer program, such as a USB flash disk, a ROM, a RAM, a removable hard disk, a magnetic disk, or an optical disk.

In an embodiment of the present application, an electronic apparatus is further provided. The electronic apparatus includes a memory and a processor. A computer program is stored in the memory, and the processor is configured to execute the computer program to perform steps in any one of the method embodiments described above.

In an embodiment, the electronic apparatus described above may further include a transmission device and an input/output device. The transmission device is connected to the processor described above, and the input/output device is connected to the processor described above.

In this embodiment, the processor described above may be configured to perform steps S1 and S2 by means of a computer program.

In step S1, multimedia data and description information are acquired in the first device, and the description information is used for describing the multimedia data and an environment of the first device when recording the multimedia data.

In step S2, the multimedia data and the description information are transmitted from the first device to the second device.

In an embodiment, specific examples in this embodiment may be made with reference to the examples described in the above embodiments and example implementation modes, which will not be described in detail in this embodiment.

It should be understood by those skilled in the art that each of the above-mentioned modules or steps of the present disclosure may be implemented by a general-purpose computing apparatus, the modules or steps may be concentrated on a single computing apparatus or distributed on a network composed of multiple computing apparatuses, for example, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

## Claims

1. A multimedia information transmission method, comprising:
acquiring, in a first device, multimedia data and description information, wherein the description information is used for describing the multimedia data and an environment of the first device when recording the multimedia data; and
transmitting the multimedia data and the description information from the first device to a second device.

2. The method of claim 1, wherein transmitting the multimedia data and the description information from the first device to the second device comprises:
transmitting the multimedia data to the second device in a first channel, and transmitting the description information to the second device in a second channel;
wherein the first channel and the second channel are established between the first device and the second device.

3. The method of claim 2, wherein the second channel is an independent channel or a tunnel in the first channel.

4. The method of claim 1, wherein transmitting the multimedia data and the description information from the first device to the second device comprises one of:
transmitting the multimedia data to the second device in real time, so that the multimedia data is displayed on the second device in real time; and sending the description information to the second device in real time; or
transmitting the multimedia data and the description information to the second device in real time, so that the multimedia data and the description information are displayed on the second device in real time.

5. The method of claim 1, wherein before transmitting the multimedia data and the description information from the first device to the second device, the method further comprises:
compressing, encoding and packaging the multimedia data into a first data packet, and packaging the description information into a second data packet.

6. The method of claim 1, wherein the description information comprises at least one of:
a timestamp, which is used for describing record time of the multimedia data;
duration time, which is used for describing duration time of the multimedia data from initial time to current time;
a coordinate, which is used for describing a record position of the multimedia data;
object identification information, which is used for identifying an object in a picture corresponding to the multimedia data; or
a description content, which is used for describing at least one of an environment in the picture corresponding to the multimedia data or information obtained by analyzing the multimedia data.

7. The method of claim 6, wherein the description content comprises at least one of:
a text content from voice recognition of audio data, a language of the audio data, an intonation of the audio data, an emotion of an object in a video image, a physical characteristic of the object in the video image, an action of the object in the video image, a power of the object in the video image, a wind power in an environment of a picture corresponding to the video image, a wind direction in the picture corresponding to the video image, an temperature in an environment of a picture corresponding to the multimedia data, a smell sense in the environment of the picture corresponding to the video image, a smell in the environment of the picture corresponding to the video image, or a tactile sense of the object in the video image, wherein the multimedia data comprises video data and the audio data.

8. The method of claim 1, wherein transmitting the multimedia data and the description information from the first device to the second device comprises one of:
transmitting the multimedia data and the description information from the first device to the second device using a real-time transport protocol, RTP;
transmitting the description information from the first device to the second device using a session initiation protocol, SIP;
transmitting the description information from the first device to the second device using a real time streaming protocol, RTSP; or
transmitting the multimedia data and the description information from the first device to the second device using a customized transmission protocol.

9. The method of claim 1, wherein acquiring, in the first device, the multimedia data and the description information comprises:
collecting data through a plurality of sensors; and
analyzing and processing the data in the first device, and extracting the multimedia data and the description information.

10. The method of claim 9, wherein the plurality of sensors comprises at least one of: a motion sensor, an environment sensor, a laser radar, a millimeter wave radar, a scent sensor, or a sensing glove.

11. A multimedia information transmission method, comprising:
receiving, in a second device, multimedia data and description information sent by a first device, wherein the description information is used for describing the multimedia data and an environment of the first device when recording the multimedia data;
parsing the multimedia data and the description information to obtain a first content and a second content respectively; and
presenting the second content when playing the first content.

12. The method of claim 11, wherein receiving, in the second device, the multimedia data and the description information sent by the first device comprises:
receiving, in a first channel of the second device, the multimedia data sent by the first device, and receiving, in a second channel, the description information sent by the first device; wherein the first channel and the second channel are established between the first device and the second device.

13. The method of claim 11, wherein presenting the second content when playing the first content comprises:
playing the first content in at least one third device, and presenting the second content in at least one fourth device.

14. A multimedia information transmission apparatus, comprising:
an acquisition module, which is configured to acquire, in a first device, multimedia data and description information, wherein the description information is used for describing the multimedia data and an environment of the first device when recording the multimedia data; and
a transmission module, which is configured to transmit the multimedia data and the description information from the first device to a second device.

15. A multimedia information transmission apparatus, comprising:
a receiving module, which is configured to receive, in a second device, multimedia data and description information sent by a first device, wherein the description information is used for describing the multimedia data and an environment of the first device when recording the multimedia data;
a parsing module, which is configured to parse the multimedia data and the description information to obtain a first content and a second content respectively; and
an output module, which is configured to present the second content when playing the first content.

16. A terminal, comprising a first device and a second device, wherein:
the first device comprises:
an acquisition module, which is configured to acquire multimedia data and description information, wherein the description information is used for describing the multimedia data and an environment of a first device when recording the multimedia data; and
a transmission module, which is configured to transmit the multimedia data and the description information from the first device to the second device;
the second device comprises:
a receiving module, which is configured to receive the multimedia data and the description information sent by the first device;
a parsing module, which is configured to parse the multimedia data and the description information to obtain a first content and a second content respectively; and
an output module, which is configured to present the second content when playing the first content.

17. A storage medium, storing a computer program, wherein the computer program is configured to, when executed, perform the method of any one of claims 1 to 13.

18. An electronic apparatus, comprising a memory and a processor, wherein a computer program is stored in the memory, and the processor is configured to execute the computer program to perform the method of any one of claims 1 to 13.
